# EUROPÄISCHE PATENTANMELDUNG

(11) **EP 0 971 466 A1**
(43) Veröffentlichungstag der Anmeldung: **12.01.2000**
(21) Anmeldenummer: 98112637.8
(22) Anmeldetag: 08.07.1998
(51) Int. Cl.: H02G 3/12, H02G 3/04

(54) **Einbaudose zur Verwendung in Kabelkanälen, wie Brüstungskanälen**

(71) Anmelder: Hermann Kleinhuis GmbH. & Co. KG, D-58507 Lüdenscheid (DE)
(72) Erfinder: Kleinkorres, Uwe, 58300 Wetter/Ruhr (DE)
(74) Vertreter: Mentzel, Norbert, Dipl.-Phys.

(57) **Zusammenfassung**

Die zur Aufnahme von elektrischen Installationsgeräten geeignete und zum Boden des Kabelkanals (15) beabstandet angeordnete Einbaudose (10) ist an zwei einander gegenüberliegenden Seitenwänden (11,12) mit je einer Halteklammer (20) gekuppelt. Die Halteklammern (20) sind in beiderseits einer Längsöffnung (16) des rinnenartigen Kabelkanales (15) angeordnete Nuten (17) auslösbar verrastet und auf wenigstens einer Seite aus dem Kabelkanal zusammen mit der Einbaudose (10) ausschwenkbar.

Zur Erleichterung des Einführens von Kabeln in das Innere der Einbaudose (10) für die Verdrahtung von Installationsgeräten sind die den Nuten (17) der Längsöffnung (16) des Kabelkanales (15) benachbarten Seitenwände (11-13) der Einbaudose am Dosenboden (14) klappbar gelagert und an den mit der Halteklammer gekuppelten Seitenwänden (13) verrastbar, die ihrerseits zu ihren Randseiten (22) hin offene Kanaleinführöffnungen (21) aufweisen.

## Beschreibung

Die Erfindung betrifft eine Einbaudose zur Verwendung in Kabelkanälen, wie Brüstungskanälen, geeignet zur Aufnahme elektrischer Installationsgeräte, wobei die zum Boden des Kabelkanales beabstandet angeordnete Einbaudose an zwei einander gegenüberliegenden Seitenwänden mit je einer Halteklammer gekuppelt ist, die in beiderseits einer Längsöffnung des rinnenartigen Kabelkanals angeordneten Nuten auslösbar verrastet und auf wenigstens einer Seite aus dem Kabelkanal zusammen mit der Einbaudose ausschwenkbar sind.

Es sind vielfältige Einbaudosen zum Einsetzen in Kabelkanäle bekannt geworden, wobei es in vielen Fällen üblich ist, an der Unterseite der Einbaudose verklemmbare Haltevorsprünge vorzusehen, welche Hakenleisten am inneren Bodenteil des Kabelkanals hintergreifen und an diesen verkrallen. Dabei bedient sich eine aus der DE 35 36 623 C2 bekannte Einbaudose eines gegenüber dem Kanalboden verstellbaren Dosenbodens, der die erwähnten Haltevorsprünge aufweist. Der Dosenboden ist gegenüber den sich an der Innenseite des Kabelkanalbodens abstützenden Dosenseitenwänden zusammen mit den daran angeordneten Haltevorsprüngen beispielsweise mittels Schrauben verstellbar. Dadurch lassen sich die Haltevorsprünge des Dosenbodens an den Hakenleisten des Kabelkanales verspannen, so daß eine sichere Festlegung der Einbaudose im Kabelkanal gegeben ist. Allerdings ist hierbei ein Nachteil in Kauf zu nehmen, der darin zu sehen ist, daß infolge der Verbindung der Einbaudose mit dem Boden des Kabelkanales an dieser Stelle eine Verlegung beispielsweise durchlaufender Kabel nicht möglich ist, wodurch das Platzangebot im Kabelkanal für einzubringende Kabel eingeschränkt wird.

Um diesem Übelstand abzuhelfen, hat man bereits auch gemäß der DE 28 04 419 A1 vorgeschlagen, eine in einem Kabelkanal unterzubringende Installationsdose in einem Brückenteil zu lagern, der seinerseits mit Rastleisten in Rastnuten an der Oberseite der Seitenwände des Kabelkanales eingreift. Da die Installationsdose am Brückenteil befestigt ist und eine geringere Tiefe als der Kabelkanal selbst aufweist, können unterhalb der Installationsdose durchlaufende Kabel verlegt werden, so daß das Platzangebot im Kabelkanal größer als bei der zuvor genannten Lösung ist. Allerdings ist hierbei nachteilig, daß der Brückenteil von der Seite des Kabelkanales her in gewünschter Montagelage eingeschoben werden muß, was insbesondere dann von der Montage her problematisch ist, wenn der Kabelkanal bereits verlegt wurde und zusätzliche Geräteeinbaudosen angeordnet werden sollen. Darüber hinaus ist die Einschubmontage selbst aufwendig, da es während des Verschiebevorganges zu Verklemmungen des Brückenteiles am Kabelkanal kommen kann.

Die EP 97 103 394.9 offenbart Halteklammern, die in die Längsöffnung des Kabelkanales einsetzbar sind, indem zunächst die eine Stirnseite der Halteklammer in die eine Nut am Längsrand des Kabelkanales eingeschoben wird, während die andere Stirnseite der Halteklammer in die andere Nut des Kabelkanales einklappbar ist, indem aufgrund der Elastizität der Seitenwände des Kabelkanales diese geringfügig auseinandergedrückt werden. Jede quer zur Längsrichtung des Kabelkanales verlaufende Seite jeder Halteklammer besitzt Kupplungsvorsprünge bzw. Kupplungsaufnahmen, die bei entsprechender Gestaltung der Einbaudose auch mit dieser verbunden werden kann, wobei zweckmäßiger Weise die Einbaudose zwischen zwei Halteklammern befestigt ist. Damit ist der Freiraum im Kabelkanal unterhalb der Einbaudose zugänglich, weil nämlich die Halteklammern zusammen mit der Einbaudose aus dem Kabelkanal nach oben ausschwenkbar sind. Üblicherweise besitzen die mit den Halteklammern verbundenen Einbaudosen zur Verdrahtung von in der Einbaudose anzuordnenden Installationsgeräten an ihren Seitenwänden und am Bodenteil herausbrechbare Wandungsteile, um die Kabel in das Innere der Einbaudose einführen zu können. Eine derartige Kabeleinführung wird zwar seit langem schon praktiziert, ist jedoch hinsichtlich ihrer Einführung zur Verdrahtung und der lagegerechten Abmantelung des Isoliermantels der Kabels in der Einbaudose selbst zeitraubend und umständlich.

Aufgabe der Erfindung ist es, bei einer Einbaudose der eingangs genannten Art den Vorteil der Anordnung und Festlegung an der langgestreckten Öffnung des Kabelkanales beizubehalten, und die Einführung der Kabel in das Doseninnere und deren Vorbereitung zur Verdrahtung mit in der Einbaudose befindlichen Installationsgeräten zu vereinfachen. Diese Aufgabe ist mit den im Patentanspruch 1 genannten Merkmalen gelöst. Infolge der Gestaltung der Einbaudose mit einem U-förmigen Körper, dessen parallel zu den Wänden des Kabelkanales verlaufende Seitenwände aufklappbar sind, wenn die Einbaudose zusammen mit den Halteklammern aus der Längsöffnung des Kabelkanales ausgeschwenkt sind, wird der Vorteil einer einfachen und zeitsparenden Verdrahtung ermöglicht. Die Kabel lassen sich von der Oberseite des Kabelkanales her auch in die Einbaudose hinein einlegen und durch Augenschein zur Verdrahtung problemlos abmanteln, wobei zuvor keine ausbrechbaren Wandteile zu entfernen sind, und auch eine axiale Einschubbewegung des Kabels entbehrlich ist.

Zum Aufklappen der Seitenwände der Einbaudose sind diese Seitenwände scharnierartig, beispielsweise über einstückig angeformte Filmscharniere, mit den feststehenden Teilen der Einbaudose verbunden. Das kann nach einer bevorzugten Ausführungsform der Erfindung dadurch ermöglicht werden, daß an der Unterseite der klappbaren Seitenwände zum Dosenboden offene Lagerschalen angeordnet sind, die auf die dem Dosenboden zugehörigen Scharnierzapfen aufsteckbar sind. Dabei mögen die Scharnierzapfen vorteilhaft zwei abstandsweise zueinander angeordnete Randausnehmungen im Dosenboden überbrücken, und die Lagerschalen dazu komplementär an den klappbaren Seitenwänden angeordnet sein.

Gemäß einer anderen Ausführungsform der Erfindung sind die Scharnierzapfen als vom Dosenboden in dessen Randbereich aufragende und abstandsweise zueinander angeordnete Wulste ausgebildet, die über eine Mittelrippe an den Dosenboden angeschlossen sind, und die Lagerschalen komplementär zu den Wulsten an den klappbaren Seitenwänden angeordnet.

Um die Abklapplage einer Seitenwand beliebig lange während der Dauer des Einlegens und Verdrahtens der Kabel bzw. Installationsgeräte ohne weitere Hilfsmittel sichern zu können, ist beispielsweise im mittleren Bereich zwischen den gegebenenfalls vorhandenen Scharnierzapfen am Dosenboden eine Rastöffnung angeordnet, mit der ein an der Unterseite der Seitenwände vorragender Rastfinger die Offenstellung der Seitenwand in einer etwa 90°-Abklapplage fixierend verhakt. Falls es genügt, nur einen Teilbereich einer Dosenseite offenzuhalten, ragt vorteilhaft neben der Rastöffnung an der Unterseite des Dosenbodens geringfügig zum Rand hin versetzt eine Rastleiste vor, die vom Rastfinger in einer Zwischenstellung vor Erreichen der 90°-Abklapplage erfaßbar ist und dadurch die Zwischenstellung fixiert. Bei der jeweiligen Abklapplage einer Seitenwand ist die Einbaudose soweit aus dem Kabelkanal ausgeschwenkt, daß die offene Seite der Einbaudose schräg nach oben weist und die Seitenwand auf dem Rand der Längsöffnung des Kabelkanals aufliegt. Bei Rückführung der Einbaudose in den Kabelkanal wird durch den Rand des Kabelkanals die Seitenwand selbsttätig in ihre Anklapplage, d.h. Schließlage, überführt. Dabei wird auch in jedem Fall ein in die Einbaudose eingeführtes Kabel zugentlastet.

Zur Aufrechterhaltung der Anklapplage der Seitenwände an dem U-förmigen Grundkörper der Einbaudose können verschiedene Verrastungseinrichtungen bekannter Art Verwendung finden. Vorteilhaft weisen jedoch die klappbaren Seitenwände an ihren in Anklapplage vom Dosenboden aufragenden Seitenrändern Rastrillen auf, die mit randseitigen Rastleisten der mit den Halteklammern gekuppelten Seitenwände verrastbar sind. Dabei sind die Rastleisten im Randbereich der mit den Halteklammern kuppelbaren Seitenwände vorteilhaft nach innen geneigt und bilden im Verbindungszustand mit den Rastrillen der klappbaren Seitenwände einen außenseitig glattwandigen Eckbereich am Dosenumfang.

Um einerseits das Einlegen der Kabel in die Einbaudose von der Seite her zu erleichtern und andererseits die Ausklappbewegung der Einbaudose mit den Halteklammern auf das unbedingt erforderliche Maß zu beschränken, sind die Kabeleinführöffnungen in den mit der Halteklammer gekuppelten Seitenwänden der Einbaudose als etwa parallel zum Dosenboden verlaufende Schlitze gestaltet, dessen obere Begrenzung zur Randseite hin, aber vom Dosenboden wegweisend, geneigt verläuft. Dadurch wird das Einlegen der Kabel von der Seite her in die Einbaudose wesentlich erleichtert.

Infolge der Ausbildung der klappbaren Seitenwände mit Rastrillen und der fest mit dem Dosenboden verbundenen Seitenwände mit Rastleisten (wobei die Rastmittel auch umgekehrt angeordnet sein können), lassen sich die zu öffnenden Seitenwände im Falle der Verwendung von Scharnierzapfen und Lagerschalen auch schlittenartig von den feststehenden Dosenwänden entfernen oder auch wieder bis zur Endposition aufschieben.

Auch lassen sich mehrere Einbaudosen über Kupplungselemente zu einer Kombination aneinanderreihen, wobei diese Kombination dann zusammen mit der Gerätebestückung aus dem Kabelkanal ausschwenkbar ist.

Ein Ausführungsbeispiel der erfindungsgemäßen Einbaudose ist aus den Zeichnungen ersichtlich und wird nachfolgend näher beschrieben. Es zeigen:
- Fig. 1: die einseitig aus einem Kabelkanal herausgeschwenkte Einbaudose zusammen mit der randseitig im Schnitt dargestellten Halteklammer bei aufgeklappter Seitenwand der aus dem Kabelkanal ausgeschwenkten Einbaudosenseite in einer Stirnansicht,
- Fig. 2: die in strichpunktierten Linien angedeutete Einbaudose zwischen zwei Halteklammern, die sich in Einbaulage im Kabelkanal befinden, der gegenüber Fig. 1 in einer verkleinerten Draufsicht dargestellt ist,
- Fig. 3: die im Fig. 1 entsprechenden Maßstab dargestellte Einbaudose in einem Schnitt nach der Linie III - III von Fig. 4,
- Fig. 4: die aus Fig. 3 ersichtliche Einbaudose in einer Draufsicht bei vom Dosenboden abgenommenen, klappbaren Seitenwänden,
- Fig. 5: die aus Fig. 4 ersichtliche Einbaudose in einer Stirnansicht, deren klappbare Wände abgenommen sind,
- Fig. 6: eine perspektivische Ansicht der auf der linken Seite von Fig. 4 dargestellten klappbaren Seitenwand,

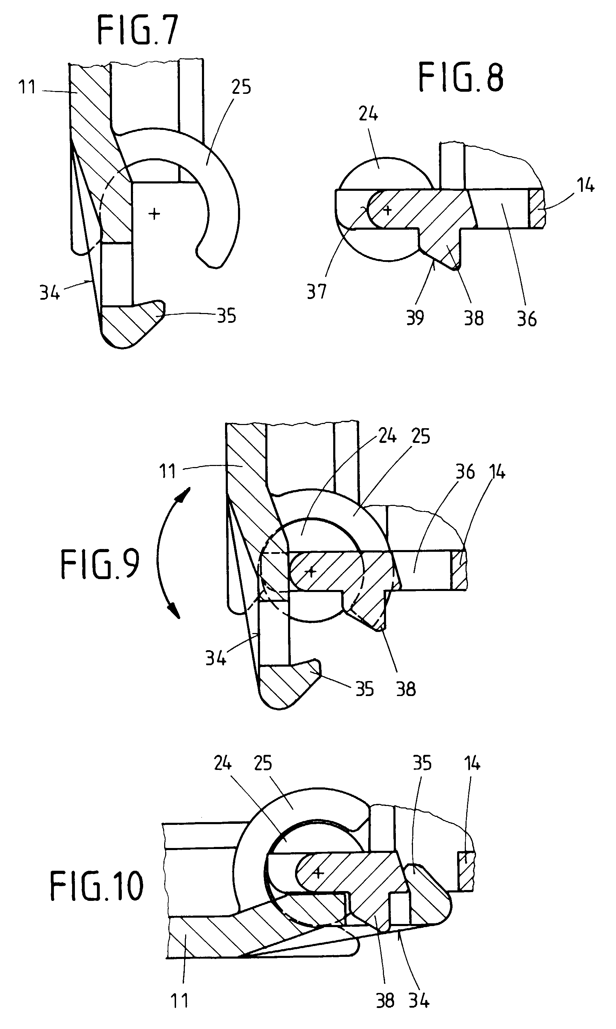

- Fig. 7: den unteren, mit einem Rastfinger versehenen Randbereich einer klappbaren Seitenwand in einem Schnitt nach der Linie VII - VII von Fig. 6,
- Fig. 8: den außenseitigen Randbereich des Dosenbodens mit einer Rastöffnung und einer Rastleiste in einem Schnitt nach der Linie VIII - VIII von Fig. 4,
- Fig. 9: die mit ihren Lagerschalen auf die Scharnierzapfen am Dosenboden aufgesteckte Seitenwand bei deren geschlossener Stellung in einem den Fig. 7 und 8 analogen Schnitt,
- Fig. 10: die aus Fig. 9 ersichtliche Verbindung zwischen Dosenboden und Seitenwand, die in ihrer 90°-Abklapplage am Dosenboden verrastet ist.

Zunächst wird darauf hingewiesen, daß die dargestellte und nachfolgend beschriebene Einbaudose ein Ausführungsbeispiel des Erfindungsgegenstandes ist, der auch abweichend von der dargestellten Ausführungsform gestaltet sein kann, wie dies oben bereits angedeutet wurde. In der Einbaudose können an sich bekannte Installationsgeräte untergebracht werden, wobei es sich um Steckdosenteile, Schalterteile od.dgl. andere, an sich bekannte elektrische oder elektronische Installationsgeräte handeln kann. Im übrigen ist auf die Darstellung von Kabeln, Leitungen u.dgl. verzichtet worden, die einerseits im Innenraum des Kabelkanales untergebracht werden können, oder aber in das Innere der Einbaudose einmünden. Alle in der Zeichnung fehlenden Bauteile können eine an sich bekannte Ausbildung und Gestaltung haben.

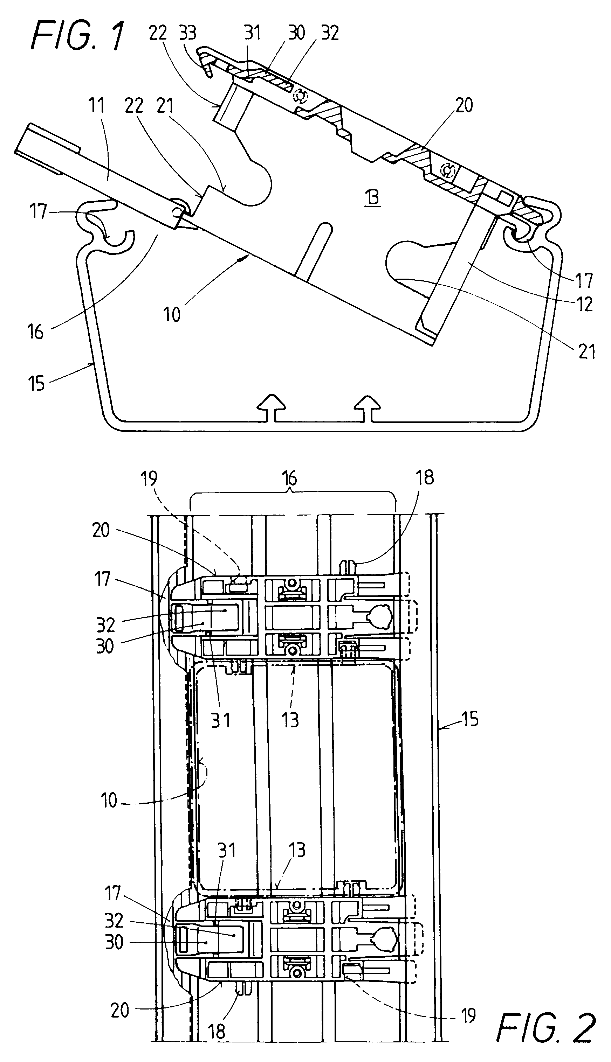

Die Einbaudose 10 weist einen im wesentlichen U-förmigen Grundkörper auf, der aus dem Dosenboden 14 und aus den damit einstückig verbundenen, aufragenden Seitenwänden 13 gebildet ist. Beim Einsatz dieser Einbaudose 10 in den Kabelkanal 15 verlaufen die Seitenwände 13 quer zur Längsrichtung des Kabelkanales, während die sich parallel zu den Nuten 17 der Längsöffnung 16 des Kabelkanales 15 erstreckenden Seitenwände 11 und 12 am Dosenboden klappbar angelenkt sind. Im oberen Randbereich der Einbaudose 10 weisen die Seitenwände 13 auf einer Seite einen nach außen vorragenden Rastknopf 18 auf, während auf der anderen Seite ein Durchbruch 19 angeordnet ist, welcher so bemessen ist, daß er den Schaftteil des Rastknopfes 18 aufnehmen kann. Entsprechende Kupplungselemente in Form eines Rastknopfes 18 und eines Durchbruches 19 weisen wechselseitig auch die Randbereiche von in den Nuten 17 des Kabelkanales 15 einsetzbaren Halteklammern 20 auf. Jeweils eine aus den Fig. 1 und 2 ersichtliche Halteklammer läßt sich mittels der Rastknöpfe 18 und der Durchbrüche 19 mit den Seitenwänden 13 der Einbaudose 10 kuppeln, so daß die Halteklammern 20 mit der Einbaudose 10 zu einer Baueinheit miteinander verbunden sind.

Die mit dem Dosenboden einstückig verbundenen Seitenwände 13 weisen beiderseits Kabeleinführöffnungen 21 auf, die zur Randseite 22 der Seitenwand 13 hin offen sind, und deren obere Begrenzung zur Randseite 22 hin vom Dosenboden 14 nach oben wegweisend geneigt verlaufen.

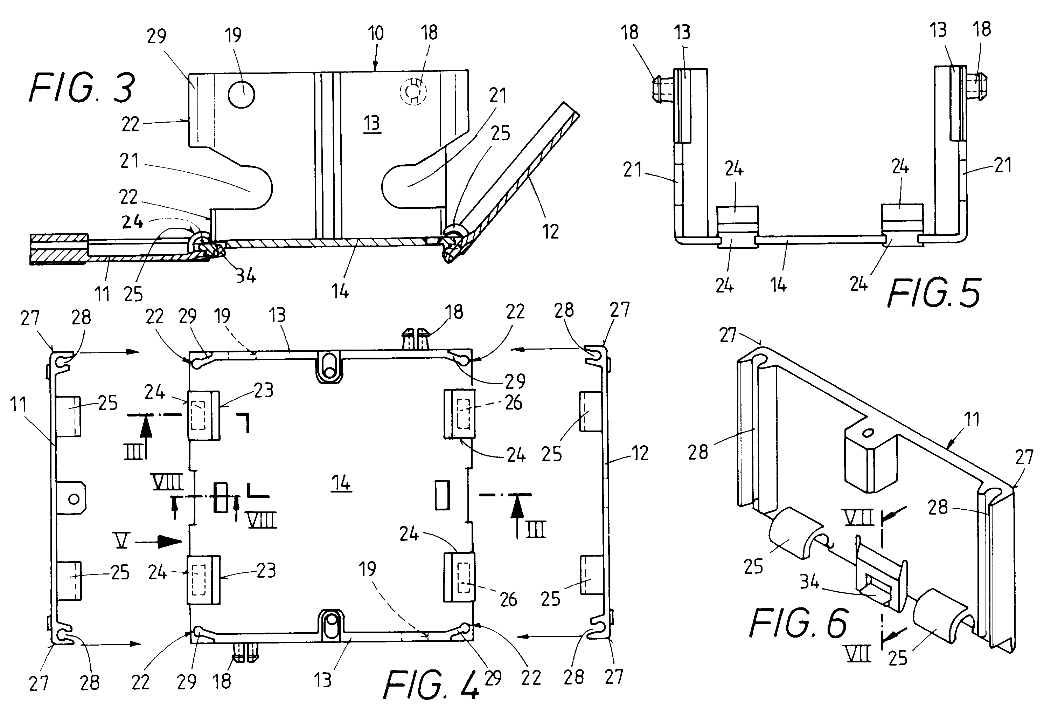

Der Dosenboden 14 kann - wie in den Fig. 3 und 4 auf deren linker Seite des Ausführungsbeispiels dargestellt - zwei zueinander beabstandete Randausnehmungen 23 aufweisen, die durch jeweils einen bolzenförmigen Scharnierzapfen 24 überbrückt sind. Die daran schwenkbar angelenkte Seitenwand 11 besitzt an ihrer Unterseite zwei dazu komplementäre Lagerschalen 25, welche auf die Scharnierzapfen 24 aufsteckbar sind, derart, daß ihre Lagerposition durch elastische Rückformung gesichert ist.

Abweichend von der zuvor genannten Ausführungsform des Klappgelenkes der Seitenwand 11 kann das Klappgelenk auch so gestaltet sein, wie dies in Fig. 5 dargestellt ist. Bei dieser Ausführungsform ist der Scharnierzapfen 24 Bestandteil eines Wulstes 26, der am Rand des Dosenbodens 14 von diesem aufragend angeordnet ist. Auch bei dieser Ausführungsform ist an der Unterseite der Seitenwand 12 eine Lagerschale 25 komplementär zu den Wulsten 26 angeordnet, welche die Scharnierzapfen 24 in gleicher Weise über- und hintergreift, wie die Lagerschalen 25 der Seitenwand 11.

Jede Seitenwand 11 bzw. 12 weist an ihren Seitenrändern 27 Rastrillen 28 auf, die mit den als Rastleisten 29 ausgebildeten Randseiten 22 kuppelbar sind, indem die Rastrillen 28 die Rastleisten 29 in Anklapplage der Seitenwände 11 und 12 an die Seitenwände 13 verrastend übergreifen. Um in Anklapplage der Seitenwände 11 und 12 an die Seitenwände 13 einen glattwandigen Eckbereich am Dosenumfang zu bilden, sind die Rastleisten 29 der Seitenwände 13 geringfügig nach innen geneigt an den Seitenwänden 13 angeordnet, so daß auf der Außenseite der Rastleiste noch etwas Freiraum für die äußere Begrenzungswandung der Rastrille 28 verbleibt, um einen glattwandigen Übergang des Seitenrandes 27 zur Außenseite der Seitenwand 13 zu schaffen.

Im mittleren Bereich der Seitenwände 11 und 12 ist an deren Unterseite zwischen den Lagerschalen 25 ein begrenzt elastischer Rastfinger 34 angeordnet, der an seinem freien Ende eine zur Innenseite der Seitenwand 11 bzw. 12 vorspringende Rastnase 35 aufweist. Am Randbereich des Dosenbodens 14 ist an mit dem Rastfinger 34 korrespondierender Stelle eine Rastöffnung 36 vorgesehen, in welcher der Rastfinger 34 eingreifen kann und mit seiner Rastnase 35 verhakt, wenn die Seitenwand aus ihrer gegenüber dem Dosenboden 14 senkrechten Lage in eine horizontale, etwa mit dem Dosenboden 14 ebene Lage geschwenkt wird. Zwischen der Außenkante 37 des Dosenbodens 14 und der Rastöffnung 36 befindet sich an der Unterseite des Dosenbodens eine aus diesem abragende Rastleiste 38, die durch eine Schrägfläche 39 eine solche Form erhält, daß die Spitze der Rastnase 35 unter geringfügiger elastischer Aufbiegung an der Rastleiste 38 vorbei gedreht werden kann, aber hinter der Rastleiste 38 in einer Zwischenstellung verrastet, bei der die Seitenwand 11 bzw. 12 in einer solchen Abklapplage arretiert ist, daß sie gegenüber dem Dosenboden 14 etwa 30° geneigt ist.

Bei der in Fig. 2 dargestellten Einklapplage der Einbaudose in das Innere des Kabelkanales 15 sind die Seitenwände 11 und 12 an die Seitenwände 13 angeklappt und an diesen verrastet. Wenn nun zur Einführung von Kabeln durch die Kabeleinführöffnungen 21 die Einbaudose 10 aus dem Kabelkanal herausgeschwenkt werden soll, so sind zunächst die über eine Gelenkstelle 31 mit den Halteklammern verbundenen Verriegelungslaschen 30 an der Handhabungsplatte 32 niederzudrücken, so daß der Spreizhaken 33 der Verriegelungslasche 30 nach oben schwenkt und aus der unteren Rinne der Nut 17 freikommt. Infolge der Eigenelastizität der Seitenwände des Kabelkanals 15 lassen sich dann die Halteklammern 20 mit der dazwischen festgelegten Einbaudose 10 aus dem Kabelkanal 15 so weit herausschwenken, daß die Seitenwand 11 aufgeklappt und in der zuvor beschriebenen Weise in der gewählten Abklapplage arretiert werden kann. Diese Lage der Halteklammern 20 mit der Einbaudose 10 im Verhältnis zum Kabelkanal 15 ist aus Fig. 1 ersichtlich. In dieser Lage lassen sich die Kabel über die Kabeleinführungsöffnungen 21 in die Einbaudose 10 einlegen und dort für die Verdrahtung vorbereiten.

Wie bereits erwähnt, geben die dargestellten und vorbeschriebenen Ausführungsformen den Erfindungsgegenstand nur beispielsweise wieder, der keinesfalls allein darauf beschränkt ist. Es sind vielmehr noch weitere Abänderungen und Ausgestaltungen des Erfindungsgegenstandes denkbar. Überdies sind alle aus der Beschreibung und aus den Zeichnungen ersichtlichen Merkmale erfindungswesentlich, auch wenn sie in den Ansprüchen nicht ausdrücklich beansprucht wurden.

### Bezugszeichenliste:

- 10: Einbaudose
- 11: Seitenwand
- 12: Seitenwand
- 13: Seitenwand
- 14: Dosenboden
- 15: Kabelkanal
- 16: Längsöffnung, von 15
- 17: Nut, bei 16
- 18: Rastknopf
- 19: Durchbruch
- 20: Halteklammer
- 21: Kabeleinführöffnung
- 22: Randseite, an 13
- 23: Randausnehmung, in 14
- 24: Scharnierzapfen, an 14
- 25: Lagerschale. an 11, 12
- 26: Wulst, an 14
- 27: Seitenrand, von 11, 12
- 28: Rastrille, an 27
- 29: Rastleiste
- 30: Verriegelungslasche
- 31: Gelenkstelle
- 32: Handhabungsplatte
- 33: Spreizhaken
- 34: Rastfinger, an 11,12
- 35: Rastnase, an 34
- 36: Rastöffnung, in 14
- 37: Außenkante, an 14
- 38: Rastleiste, an 14
- 39: Schrägfläche

## Patentansprüche

1. Einbaudose zur Verwendung in Kabelkanälen, wie Brüstungskanälen, geeignet zur Aufnahme elektrischer Installationsgeräte, wobei die zum Boden des Kabelkanales beabstandet angeordnete Einbaudose an zwei einander gegenüberliegenden Seitenwänden mit je einer Halteklammer gekuppelt ist, die in beiderseits einer Längsöffnung des rinnenartigen Kabelkanals angeordneten Nuten auslösbar verrastet und auf wenigstens einer Seite aus dem Kabelkanal zusammen mit der Einbaudose ausschwenkbar sind,
**dadurch gekennzeichnet,**
daß die den Nuten (17) der Längsöffnung (16) des Kabelkanales (15) benachbarten Seitenwände (11, 12) der Einbaudose (10) am Dosenboden (14) klappbar gelagert und an den mit der Halteklammer (20) gekuppelten Seitenwänden (13) verrastbar sind, die ihrerseits zu ihren Randseiten (22) hin offene Kabeleinführöffnungen (21) aufweisen.

2. Einbaudose nach Anspruch 1, dadurch gekennzeichnet, daß die Seitenwände (11, 12) mit dem Dosenboden (14) über jeweils Filmscharniere verbunden sind.

3. Einbaudose nach Anspruch 1, dadurch gekennzeichnet, daß an der Unterseite der klappbaren Seitenwände (11, 12) zum Dosenboden (14) offene Lagerschalen angeordnet sind, die auf dem Dosenboden (14) zugehörige Scharnierzapfen (24) aufsteckbar sind.

4. Einbaudose nach Anspruch 3, dadurch gekennzeichnet, daß die Scharnierzapfen (24) zwei abstandsweise zueinander angeordnete Randausnehmungen (23) im Dosenboden (14) überbrücken, und die Lagerschalen (25) dazu komplementär an den klappbaren Seitenwänden (11) angeordnet sind.

5. Einbaudose nach Anspruch 3, dadurch gekennzeichnet, daß die Scharnierzapfen (24) als vom Dosenboden (14) in dessen Randbereich aufragende und abstandsweise zueinander angeordnete Wulste (26) ausgebildet sind, die über eine Mittelrippe an den Dosenboden angeschlossen sind, und die Lagerschalen (25) komplementär zu den Wulsten (26) an den klappbaren Seitenwänden (12) angeordnet sind.

6. Einbaudose nach einem der vorhergehenden Ansprüche, dadurch gekennzeichnet, daß im Bereich zwischen den Scharnierzapfen (24) am Dosenboden (14) eine Rastöffnung (36) angeordnet ist, mit der ein an der Unterseite der Seitenwände (11, 12) vorragender Rastfinger (34) die Offenstellung der Seitenwände (11, 12) in einer etwa 90°-Abklapplage fixierend verhakt.

7. Einbaudose nach Anspruch 5, dadurch gekennzeichnet, daß neben der Rastöffnung (36) an der Unterseite des Dosenbodens (14) geringfügig zum Rand hin versetzt eine Rastleiste (38) vorragt, die vom Rastfinger (34) in einer Zwischenstellung vor Erreichen der 90°-Abklapplage erfaßbar ist.

8. Einbaudose nach einem der vorhergehenden Ansprüche, dadurch gekennzeichnet, daß die klappbaren Seitenwände (11, 12) an ihren in Anklapplage vom Dosenboden (14) aufragenden Seitenrändern (27) Rastrillen (28) aufweisen, die mit randseitigen Rastleisten (29) der mit den Halteklammern (20) gekuppelten Seitenwänden (13) verrastbar sind.

9. Einbaudose nach Anspruch 8, dadurch gekennzeichnet, daß die Rastleisten (29) der mit den Halteklammern (20) kuppelbaren Seitenwände (13) nach innen geneigt sind und im Verbindungszustand mit den Rastrillen (28) der klappbaren Seitenwände (11, 12) einen glattwandigen Eckbereich am Dosenumfang bilden.

10. Einbaudose nach einem der vorhergehenden Ansprüche, dadurch gekennzeichnet, daß die Kabeleinführöffnungen (21) in den mit der Halteklammer (20) gekuppelten Seitenwänden (13) der Einbaudose (10) als etwa parallel zum Dosenboden (14) verlaufende Schlitze gestaltet sind, dessen obere Begrenzung zur Randseite hin, aber vom Dosenboden (14) wegweisend, geneigt verläuft.
